# EUROPEAN PATENT APPLICATION

(11) **EP 4 838 597 A1**
(43) Date of publication of application: **11.11.2026**
(21) Application number: 25752521.2
(22) Date of filing: 04.02.2025
(51) Int. Cl.: H01M 10/04, H01M 10/42, H01M 50/509, H01M 50/691

(54) **SENSING BLOCK AND BATTERY MODULE ASSEMBLY HAVING SAME**

(30) Priority: 08.02.2024 KR 20240019531
(71) Applicant: Valeo Kapec Co., Ltd., Daegu 42709 (KR)
(72) Inventor: PARK, Young Jae, Daegu 42709 (KR); JO, Tae Min, Daegu 42709 (KR); KANG, Jiwoong, Daegu 42709 (KR)
(74) Representative: Isarpatent
(86) International application number: PCT/KR2025/099221
(87) International publication number: WO 2025/170413

(57) **Abstract**

Disclosed are a sensing block and a battery module assembly including the same. The sensing block may include a frame, a circuit board, and a discharge channel. The frame may be formed to correspond to a plurality of battery cells. The circuit board may be mounted on the frame and formed to be connected to an external device in order to monitor a state of the battery cell. The discharge channel may include a discharge channel formed to allow moisture to be discharged from a space between the frame and the circuit board.

## Description

### [Technical Field]

The present disclosure relates to a sensing block used to monitor a state of a battery cell, and a battery module assembly including the same.

### [Background Art]

Secondary batteries are being widely used as energy sources for mobile devices. In addition, the secondary batteries have attracted attention as power sources for electric vehicles (EVs), hybrid electric vehicles (HEVs), and the like.

A basic unit of the secondary battery is a battery cell. One or two battery cells are used for a small-scale mobile, whereas a battery pack assembly is used for medium-scale or large-scale apparatuses such as vehicles. The battery pack assembly implements a high output and a high capacity by electrically connecting a plurality of battery module assemblies. The battery module assembly is configured by connecting a plurality of battery cells.

In case that some of the battery cells in the battery module assembly are in an overvoltage, overcurrent, or overheating state, the safety and operational efficiency of the battery module assembly, particularly the entire battery pack assembly are significantly affected. In order to monitor such a situation, each of the battery module assemblies adopts an electrical component, such as a circuit board.

### [Disclosure]

### [Technical Problem]

According to the findings of the present inventors, moisture may be generated in a battery pack assembly due to condensation under a use environment. The moisture may act on a circuit board and short-circuit an electrical circuit. In this case, battery cells cannot be monitored.

One object of the present disclosure is to provide a sensing block capable of minimizing a likelihood that an electrical circuit used for monitoring is damaged by moisture, and a battery module assembly including the same.

Technical problems to be solved by the present disclosure are not limited to the above-mentioned technical problems, and other technical problems, which are not mentioned above, may be clearly understood by those skilled in the art from the following descriptions.

### [Technical Solution]

In order to achieve the above-mentioned object, a sensing block for a battery module assembly according to one aspect of the present disclosure may include: a frame formed to correspond to a plurality of battery cells; a circuit board mounted on the frame and formed to be connected to an external device in order to monitor a state of the battery cell; and a discharge channel formed to allow moisture to be discharged from a space between the frame and the circuit board.

In this case, the discharge channel may include a portion having a shape removed from one of the frame and the circuit board.

In this case, the discharge channel may include a through-portion formed through the circuit board.

In this case, the through-portion may be open toward the outside through an end of the circuit board.

In this case, the through-portion may be provided as a plurality of through-portions disposed in one direction of the circuit board.

In this case, the frame may include: a wall surface configured to face a main surface of the circuit board; and a bottom surface connected to the wall surface, and the bottom surface may be formed to be inclined so as to become distant from the discharge channel in a direction away from the wall surface.

In this case, the frame may include: a wall surface configured to face a main surface of the circuit board; and a bottom surface connected to the wall surface, and the discharge channel may include a through-portion formed in the bottom surface.

In this case, the through-portion may be open toward the outside through an end of the bottom surface.

In this case, one of the frame and the circuit board may include a spacer configured to space the circuit board apart from the frame.

In this case, the spacer may include a support protrusion protruding from the frame and configured to support the circuit board.

In this case, a busbar configured to electrically connect an electrode lead of the battery cell and the circuit board may be further included.

In this case, an upper end of the circuit board may be positioned above an upper end of the busbar, and the discharge channel may be positioned to be shifted from the busbar in a direction intersecting a direction in which the busbar extends.

In this case, the busbar and the discharge channel may be respectively provided as a plurality of busbars and a plurality of discharge channels, and the plurality of discharge channels may each be positioned between a pair of busbars adjacent to each other among the plurality of busbars.

In this case, the discharge channel may further include a communication portion configured to allow air to be introduced into the space.

A battery module assembly according to another aspect of the present disclosure may include a battery cell assembly including a cartridge, and a battery cell mounted in the cartridge; and a sensing block coupled to the battery cell assembly, in which the sensing block includes: a frame formed to correspond to the battery cell assembly; a circuit board mounted on the frame and formed to be connected to an external device in order to monitor a state of the battery cell; and a discharge channel formed to allow moisture to be discharged from a space between the frame and the circuit board.

In this case, the discharge channel may include a portion having a shape removed from one of the frame and the circuit board.

In this case, the discharge channel may include a through-portion formed through the circuit board.

In this case, the through-portion may be open toward the outside through an end of the circuit board.

In this case, one of the frame and the circuit board may include a spacer configured to space the circuit board apart from the frame.

In this case, the discharge channel may further include a communication portion formed in one of the frame and the circuit board and configured to allow air to be introduced into the space.

### [Advantageous Effects]

According to the sensing block and the battery module assembly including the same according to the present disclosure configured as described above, moisture, which is generated in the space between the frame and the circuit board mounted on the frame, may be discharged from the space through a discharge channel, thereby minimizing a likelihood that the electrical circuit of the circuit board is damaged by moisture.

As a result, the circuit board may operate stably, such that the battery cell may be stably monitored.

### [Description of Drawings]

FIG. 1 is a coupled perspective view of a battery module assembly according to an embodiment of the present disclosure.
FIG. 2 is an exploded perspective view of the battery module assembly in FIG. 1.
FIG. 3 is an assembled perspective view of a front-surface-side sensing block in FIG. 2.
FIG. 4 is an exploded perspective view of the sensing block in FIG. 3.
FIG. 5 is a longitudinal sectional view of a part of the sensing block in FIG. 3.
FIG. 6 is a perspective view of a base of a circuit board in FIG. 3.
FIG. 7 is a perspective view illustrating a sensing block according to another embodiment of the present disclosure.

### [Mode for Invention]

Hereinafter, exemplary embodiments of the present disclosure will be described in detail with reference to the accompanying drawings.

The present disclosure is not limited to the embodiments disclosed herein, but will be variously changed and implemented in various different forms. The embodiments are provided so that the present disclosure will be thorough and complete, and also to provide a more complete understanding of the scope of the present disclosure to those of ordinary skill in the art. Therefore, it should be understood that the present disclosure is not limited to the embodiments disclosed below, but the configuration of any one embodiment and the configuration of another embodiment can be substituted or added, and the present disclosure includes all alterations, equivalents, and alternatives that are included in the technical spirit and scope of the present disclosure.

It should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure. In the drawings, sizes or thicknesses of constituent elements may be exaggerated, increased, or decreased for convenience of understanding, but the protection scope of the present disclosure should not be restrictively construed.

The terms used in the present specification are used only for the purpose of describing particular examples or embodiments and are not intended to limit the present disclosure. Further, singular expressions include plural expressions unless clearly described as different meanings in the context. In the present application, the terms "comprises," "comprising," "includes," "including," "containing," "has," "having", and other variations thereof are intended to specify the presence of features, integers, steps, operations, elements, components, and/or combinations thereof disclosed in the specification. That is, in the present application, it should be understood that the terms "comprises," "comprising," "includes," "including," "containing," "has," "having", and other variations thereof do not preclude the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to or "communicating with" another constituent element, it should be understood that one constituent element can be coupled or connected directly to or communicate directly with another constituent element, and an intervening constituent element can also be present between the constituent elements. When one constituent element is described as being "coupled directly to," "connected directly to," or "communicating directly with" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present disclosure pertains. The terms such as those defined in a commonly used dictionary should be interpreted as having meanings consistent with meanings in the context of related technologies and should not be interpreted as ideal or excessively formal meanings unless explicitly defined in the present application.

In the embodiment, a battery module assembly may have an approximately rectangular parallelepiped shape. Therefore, based on the drawings, an upper side of an outer surface of the battery module assembly is referred to as an upper surface, and a lower side of the outer surface of the battery module assembly is referred to as a lower surface. A surface of the battery module assembly, which is viewed from the front side, is referred to as a front surface, and a surface of the battery module assembly, which is viewed from the rear side, is referred to as a rear surface. The remaining two lateral surfaces are respectively referred to as a left surface positioned at a left side of the front surface and a right surface positioned at a right side of the front surface. A direction in which the front surface and the rear surface are connected may be referred to as a longitudinal direction, and a direction in which the upper surface and the lower surface are connected may be referred to as a height direction. A direction in which the left surface and the right surface are connected may be referred to as a width direction. The longitudinal direction, the width direction, and the height direction may be perpendicular to one another.

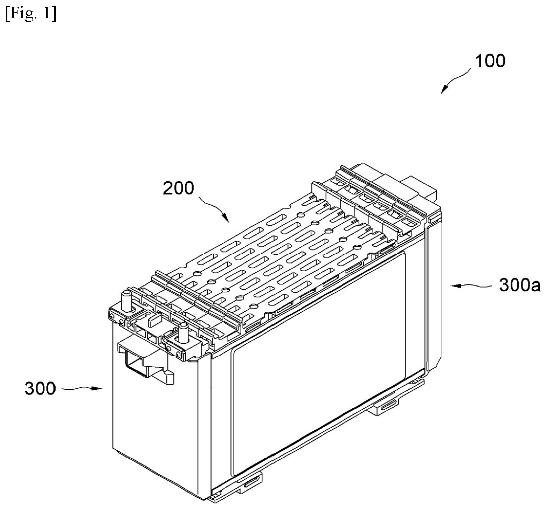

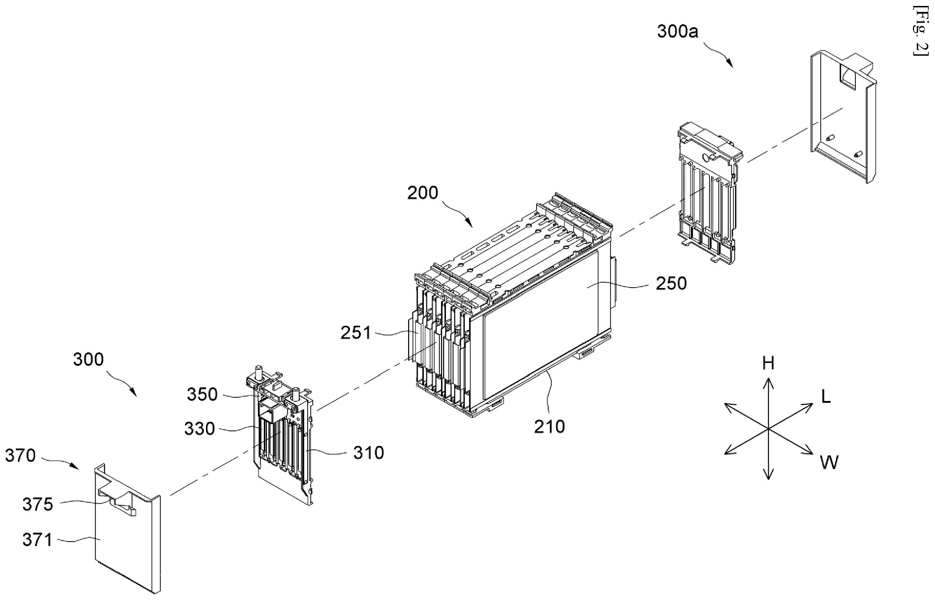

FIG. 1 is a coupled perspective view of a battery module assembly according to an embodiment of the present disclosure, and FIG. 2 is an exploded perspective view of the battery module assembly in FIG. 1.

With reference to the present drawings, a battery module assembly 100 may have a battery cell assembly 200 and sensing blocks 300 and 300a.

The battery cell assembly 200 is configured such that two battery cells 250 are assembled to a single cartridge 210. The cartridge 210 may have an approximately plate shape. A main surface of the battery cell 250 may be disposed to face a main surface of the cartridge 210. Electrode leads 251 protrude from two opposite ends of the battery cell 250 based on a longitudinal direction L. An example is described in which the battery cell 250 has a pouch shape. However, the present disclosure is not limited thereto.

The sensing block 300 or 300' is configured to monitor a state of the battery cell 250. The state may be a voltage, a temperature, or the like of the battery cell 250. The sensing blocks 300 and 300a may be respectively fastened to front and rear surfaces of the battery cell assembly 200 while corresponding to the two electrode leads 251 of the battery cell 250. Because the front-surface-side sensing block 300 and the rear-surface-side sensing block 300a are approximately identical in main configuration to each other, the description will be described below with reference to the front-surface-side sensing block 300.

With reference back to FIGS. 1 and 2, the sensing block 300 may have frames 310, busbars 330, circuit boards 350, and protective covers 370.

The frame 310 may be provided in the form of a plate corresponding to a plurality of battery cell assemblies 200. Sizes of the frame 310 in a width direction W and a height direction H may be determined so as to correspond to the plurality of battery cell assemblies 200. The frame 310 may be manufactured by injection-molding using insulating resin.

The busbar 330 is a conductor for electrical connection. The busbar 330 may be a metal strip extending approximately in the height direction H. The busbars 330 may be provided as a plurality of busbars 330 corresponding to the plurality of battery cells 250. The busbar 330 is electrically connected to the electrode lead 251 of the battery cell 250. The busbar 100 may be mounted on the frame 310 by thermal fusion, for example.

The circuit board 350 may be formed to be connected to an external device in order to monitor the state. The external device may be a battery management system (BMS). The circuit board 350 may be electrically connected to the battery cell 250 through the busbar 330. The BMS may be connected to the battery cell 250 through the busbar 330 and the circuit board 350 and measure a voltage value of the battery cell 250. A temperature sensor (not illustrated) may be connected to the circuit board 350 in order to measure a temperature of the battery cell 250. A temperature value measured by the temperature sensor is transmitted to the BMS through the circuit board 350. In an alternative embodiment, a circuit capable of measuring the voltage value may be implemented on the circuit board 350, or a component for measuring a voltage may be mounted on the circuit board 350.

The circuit board 350 may also be mounted on the frame 310. When the busbar 330 is mounted in a lower region of the frame 310, the circuit board 350 may be mounted in an upper region of the frame 310. The busbar 330 and the circuit board 350 may occupy approximately separate regions on the frame 310, but the busbar 330 and the circuit board 350 may partially overlap each other.

The protective cover 370 is configured to cover the busbar 330 and the circuit board 350 to protect the busbar 330 and the circuit board 350 from the outside. The protective cover 370 may have a body part 371 corresponding to a main surface of the frame 310. The body part 371 may be formed with an opening port 375. A cable (not illustrated), which connects the circuit board 350 and the external device, may extend through the opening port 375.

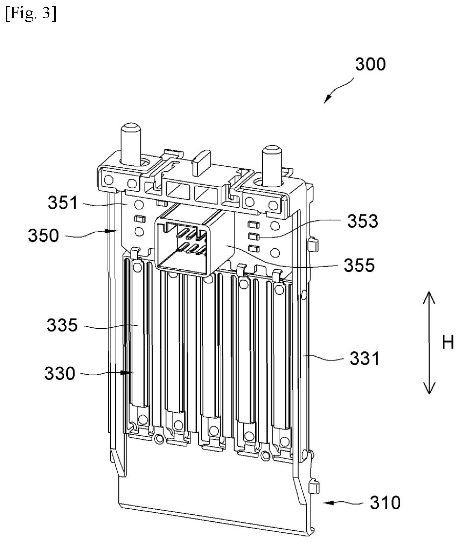

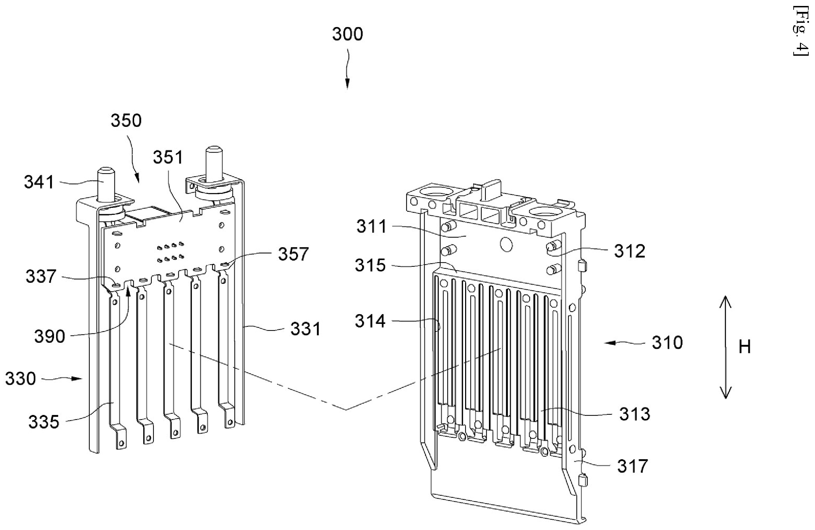

The sensing block 300 will be described more specifically with reference further to FIGS. 3 and 4. FIG. 3 is an assembled perspective view of the front-surface-side sensing block in FIG. 2, and FIG. 4 is an exploded perspective view of the sensing block in FIG. 3.

With reference to the present drawings, the frame 310 may have wall surfaces 311 and 313 and a lateral surface 317. The wall surfaces 311 and 313 may be divided into one wall surface 311 and the other wall surface 313 by a bottom surface 315. The wall surfaces 311 and 313 are connected to the bottom surface 315. When one wall surface 311 corresponds to the upper region, the other wall surface 313 corresponds to the lower region. Support protrusions 312 may protrude from the wall surface 311. The other wall surface 313 may be formed with slots 314 extending in the height direction H. The electrode lead 251 (see FIG. 3) of the battery cell 250 may penetrate the slot 314. The bottom surface 315 may be arranged in a direction intersecting the wall surfaces 311 and 313.

The busbars 330 may include high-voltage busbars 331 and low-voltage busbars 335. The busbars 331 and 335 may be coupled to the electrode leads 251 of the battery cells 250 by welding, for example. The busbars 331 and 335 are electrically connected to the battery cells 250 in order to detect the voltage values. The high-voltage busbar 331 may be connected to a voltage output bolt 341 and further serve to output electric power stored in the battery cells 250 to the outside.

The high-voltage busbars 331 are respectively disposed on two opposite surfaces 317 of the frame 310. On the contrary, five low-voltage busbars 335 are disposed on the wall surfaces 311 and 313, specifically the wall surface 313 of the frame 310. In the present embodiment, an example is described in which six battery cell assemblies 200 are stacked, and twelve electrode leads 251 are connected in series. Therefore, ten electrode leads 251 correspond to five low-voltage busbars 335, and two electrode leads 251 correspond to two high-voltage busbars 331. In this correspondence relationship, two electrode leads 251 are connected to one low-voltage busbar 335, whereas one electrode lead 251 is connected to one high-voltage busbar 331. For reference, the rear-surface-side sensing block 300a includes only the low-voltage busbar 335 without having the high-voltage busbar 331.

The circuit board 350 may be mounted on the wall surface 311. Specifically, a base 351 of the circuit board 350 may be supported by the support protrusions 312. The support protrusions 312 may allow the circuit board 350 to be fixed to the wall surface 311 in a state in which the circuit board 350 is spaced apart from the wall surface 311. The support protrusion 312 may be thermally fused to the circuit board 350. An upper end of the circuit board 350 may be positioned above the busbar 330, specifically an upper end of the low-voltage busbar 335. A lower end of the circuit board 350 may be disposed adjacent to the bottom surface 315 or supported by the bottom surface 315. The support protrusion 312 may be referred to as a spacer because the support protrusion 312 spaces the circuit board 350 apart from the wall surface 311. In an alternative embodiment, the spacer may be formed as a part of the base 351 protrudes toward the wall surface 311.

The base 351 may be provided in the form of an approximately quadrangular plate. A fuse 353 and a connector 355 may be mounted on a main surface of the base 351. The fuse 353 and the connector 355 may be disposed in an electrical connection path between the busbar 330 and the external device. The fuse 353 protects one of the battery cell 250 and the BMS from excessive electric current inputted from the other of the battery cell 250 and the BMS. A cable for connecting the BMS and the sensing block 300 is connected to the connector 355. An accommodation groove 357 may be formed in the base 351, and an end 337 of the low-voltage busbar 335 may be inserted into the accommodation groove 357 and soldered. Similar to the low-voltage busbar 335, the high-voltage busbar 331 may also be soldered to the base 351.

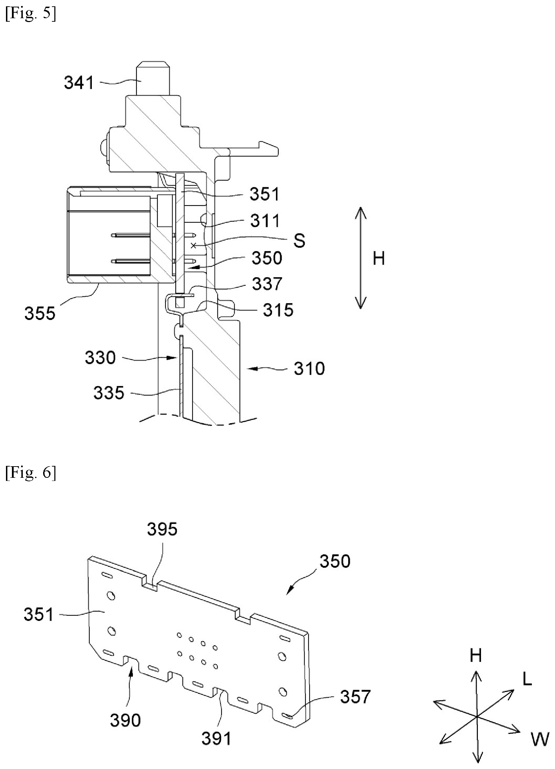

The circuit board 350 may be formed with discharge channels 390 configured to allow moisture to be discharged. The discharge channel 390 will be described with reference to FIGS. 5 and 6. FIG. 5 is a longitudinal sectional view of a part of the sensing block in FIG. 3, and FIG. 6 is a perspective view of the base of the circuit board in FIG. 3.

With reference to the present drawings, moisture may be generated in a space S between the base 351 and the wall surface 311 due to condensation or the like. The moisture may affect a soldered portion or the like between the end 337 of the low-voltage busbar 335 and the base 351. In order to eliminate an adverse effect caused by the moisture, the discharge channel 390 discharges the moisture to the outside of the space S.

In order to discharge the moisture, the discharge channel 390 may be implemented in a shape made by removal of a part of the base 351. Specifically, the base 351 is formed with through-portions 391 formed through the base 351 in the longitudinal direction L. In the present embodiment, the through-portion 391 is provided in the form of a hole open toward the outside through a lower end of the base 351. In an alternative embodiment, the through-portion 391 may be provided in the form of a closed hole instead of the open hole. In this case, the through-portion 391 may be formed in a region spaced apart from a lower-end surface of the base 351. In another alternative embodiment, the discharge channel 390 may have a shape in which only a part of an entire section formed in the longitudinal direction L of the base 351 is recessed without being formed through the base 351 in the longitudinal direction L.

Because the through-portion 391 has the shape open toward the outside through the lower end of the base 351, the bottom surface 315 faces the through-portion 391. The moisture may flow downward from the wall surface 311 to the bottom surface 315 and then flow to the outside of the space S through the through-portion 391. The bottom surface 315 may be formed to be inclined so that the bottom surface 315 becomes distant from the discharge channel 390 in a direction away from the wall surface 311. The inclined bottom surface 315 facilitates discharge of the moisture.

The through-portions 391 may be provided as a plurality of through-portions 391 disposed in one direction, e.g., the width direction W. The through-portions 391 may be positioned to be shifted from the low-voltage busbars 335 in a direction in which the low-voltage busbars 335 are arranged, e.g., the width direction W. Specifically, one through-portion 391 may be disposed between the pair of low-voltage busbars 335 adjacent to each other. This structure may minimize an influence on the low-voltage busbar 335 during a process in which the moisture passes through the through-portion 391 and flows downward to the lower region.

Communication portions 395 may be additionally formed in the base 351. Unlike the above-mentioned through-portion 391, the communication portion 395 may be formed in an upper portion of the base 351. Air may be introduced into the space S through the communication portion 395, and the introduction of air may facilitate discharge of the moisture through the through-portion 391.

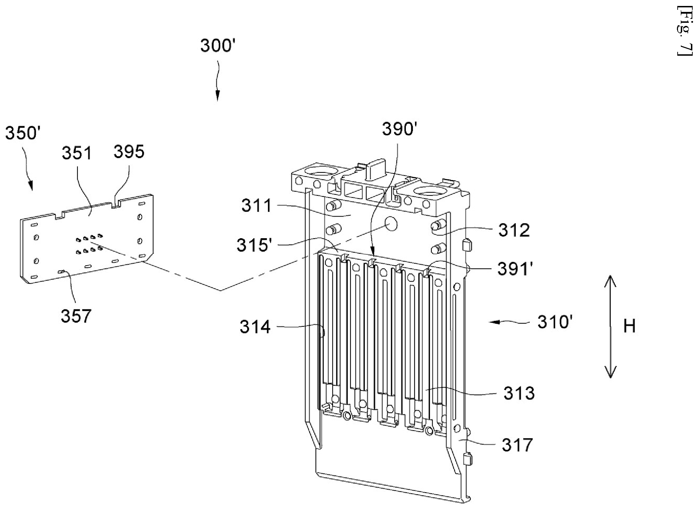

The sensing block 300' having a different shape from the above-mentioned sensing block will be described with reference further to FIG. 7. FIG. 7 is a perspective view illustrating a sensing block according to another embodiment of the present disclosure.

With reference to the present drawings, because the sensing block 300' is approximately identical to the sensing block 300 according to the above-mentioned embodiment, only a frame 310', a circuit board 350', and discharge channels 390' are illustrated.

Unlike in the above-mentioned embodiment, the discharge channel 390' may be formed in a bottom surface 315' of the frame 310'. Specifically, the discharge channel 390' may include through-portions 391' each having a shape made by removal of a part of the bottom surface 315'. In case that the through-portion 391' is formed, the bottom surface 315' may be formed horizontally without being inclined. The bottom surface 315' may be formed to be inclined toward the through-portion 391' (in the width direction W), such that moisture on the bottom surface 315' may be easily collected in the through-portion 391'. In addition, a bottom of the through-portion 391' may be inclined downward in a direction away from the wall surface 311 in order to facilitate discharge of moisture.

The through-portion 391' may be a hole open toward the outside through an end of the bottom surface 315'. The through-portion 391' may also be positioned between the pair of low-voltage busbars 335 (see FIG. 3) adjacent to each other.

The through-portion 391 (see FIG. 6) described in the above-mentioned embodiment may not be formed in the circuit board 350', but the communication portion 395 may still remain. In an alternative embodiment, both the through-portions 391 and 391' may be formed. In this case, a size of each of the through-portions 391 and 391' may be decreased in comparison with a case in which only one of the through-portions 391 and 391' is formed. In another alternative embodiment, the communication portions 395 may also be formed in the bottom surface 315' of the frame 310' or formed in the circuit board 350' and the bottom surface 315' instead of being formed in the circuit board 350'.

### [Industrial Applicability]

The present disclosure is industrially available in a battery module assembly manufacturing field.

## Claims

1. A sensing block for a battery module assembly, the sensing block comprising:
a frame formed to correspond to a plurality of battery cells;
a circuit board mounted on the frame and formed to be connected to an external device in order to monitor a state of the battery cell; and
a discharge channel formed to allow moisture to be discharged from a space between the frame and the circuit board.

2. The sensing block of claim 1, wherein the discharge channel comprises a portion having a shape removed from one of the frame and the circuit board.

3. The sensing block of claim 1, wherein the discharge channel comprises a through-portion formed through the circuit board.

4. The sensing block of claim 3, wherein the through-portion is open toward the outside through an end of the circuit board.

5. The sensing block of claim 3, wherein the through-portion is provided as a plurality of through-portions disposed in one direction of the circuit board.

6. The sensing block of claim 1, wherein the frame comprises:
a wall surface configured to face a main surface of the circuit board; and
a bottom surface connected to the wall surface, and
wherein the bottom surface is formed to be inclined so as to become distant from the discharge channel in a direction away from the wall surface.

7. The sensing block of claim 1, wherein the frame comprises:
a wall surface configured to face a main surface of the circuit board; and
a bottom surface connected to the wall surface, and
wherein the discharge channel comprises a through-portion formed in the bottom surface.

8. The sensing block of claim 7, wherein the through-portion is open toward the outside through an end of the bottom surface.

9. The sensing block of claim 1, wherein one of the frame and the circuit board comprises a spacer configured to space the circuit board apart from the frame.

10. The sensing block of claim 9, wherein the spacer comprises a support protrusion protruding from the frame and configured to support the circuit board.

11. The sensing block of claim 1, further comprising:
a busbar configured to electrically connect an electrode lead of the battery cell and the circuit board.

12. The sensing block of claim 11, wherein an upper end of the circuit board is positioned above an upper end of the busbar, and
wherein the discharge channel is positioned to be shifted from the busbar in a direction intersecting a direction in which the busbar extends.

13. The sensing block of claim 12, wherein the busbar and the discharge channel are respectively provided as a plurality of busbars and a plurality of discharge channels, and
wherein the plurality of discharge channels are each positioned between a pair of busbars adjacent to each other among the plurality of busbars.

14. The sensing block of claim 1, wherein the discharge channel further comprises a communication portion configured to allow air to be introduced into the space.

15. A battery module assembly comprising:
a battery cell assembly comprising a cartridge, and a battery cell mounted in the cartridge; and
a sensing block coupled to the battery cell assembly,
wherein the sensing block comprises:
a frame formed to correspond to the battery cell assembly;
a circuit board mounted on the frame and formed to be connected to an external device in order to monitor a state of the battery cell; and
a discharge channel formed to allow moisture to be discharged from a space between the frame and the circuit board.

16. The battery module assembly of claim 15, wherein the discharge channel comprises a portion having a shape removed from one of the frame and the circuit board.

17. The battery module assembly of claim 15, wherein the discharge channel comprises a through-portion formed through the circuit board.

18. The battery module assembly of claim 17, wherein the through-portion is open toward the outside through an end of the circuit board.

19. The battery module assembly of claim 15, wherein one of the frame and the circuit board comprises a spacer configured to space the circuit board apart from the frame.

20. The battery module assembly of claim 15, wherein the discharge channel further comprises a communication portion formed in one of the frame and the circuit board and configured to allow air to be introduced into the space.
